# EUROPÄISCHE PATENTSCHRIFT

(11) **EP 3 165 126 B1**
(45) Veröffentlichungstag und Bekanntmachung des Hinweises auf die Patenterteilung: **05.01.2022**
(21) Anmeldenummer: 15193697.8
(22) Anmeldetag: 09.11.2015
(51) Int. Cl.: A46B 3/06, A46B 13/00

(54) **BÜRSTENKOPF FÜR EINE ELEKTRISCH ANGETRIEBENE ZAHNBÜRSTE**
BRUSH HEAD FOR AN ELECTRICALLY DRIVEN TOOTHBRUSH
TETE DE BROSSE POUR UNE BROSSE A DENTS ELECTRIQUE

(43) Veröffentlichungstag der Anmeldung: 10.05.2017
(73) Patentinhaber: M+C Schiffer GmbH, 53577 Neustadt-Wied (DE)
(72) Erfinder: Schmidt, Eric, 56588 Waldbreitbach (DE); Buchholz, Erwin, 53567 Asbach (DE)
(74) Vertreter: Grünecker Patent- und Rechtsanwälte PartG mbB

(56) Entgegenhaltungen:
- EP-A1- 2 599 403

## Beschreibung

Die vorliegende Erfindung betrifft einen Bürstenkopf für eine elektrisch angetriebene Zahnbürste, mit einem Halteteil, das zumindest ein Anschlusselement für die mechanische Kopplung des Bürstenkopfes an den elektrischen Antrieb der Zahnbürste bereitstellt, wobei das Halteteil einen Zapfen, der eine Schwenkachse definiert, um die der Bürstenkopf verschwenkbar ist, und einen Teller einteilig ausbildet, der an seinem dem Zapfen abgewandten Ende zumindest ein Borstenbündel trägt, das an seinem befestigungsseitigen Ende eine durch Anschmelzen ausgebildete Verdickung aufweist, und einem im Wesentlichen scheibenförmigen Borstenträger, der eine von dem Borstenbündel durchragte Bohrung aufweist und mit dem Halteteil verbunden ist. Ein solcher Bürstenkopf ist aus der EP 2 599 403 A1 bekannt.

Ein solcher Bürstenkopf wird üblicherweise als Bestandteil eines Aufsetzteiles vertrieben, welches mit einem Handstück der elektrisch angetriebenen Zahnbürste, welches üblicherweise den Antrieb in sich aufnimmt, verbindbar ist. Das Aufsetzteil ist dabei ein Verbrauchsteil und aus Kunststoff hergestellt. Das Aufsetzteil umfasst üblicherweise ein Hülsenstück, welches von einer Antriebswelle durchsetzt ist, die mit einer Antriebswelle des Handstücks verbindbar ist. Am freien Ende des Hülsenstücks befindet sich regelmäßig der Bürstenkopf nach der vorliegenden Erfindung.

Grundsätzlich besteht bei Reinigungselementen für den Mundraum das Bedürfnis, diese sehr kompakt und raumsparend auszubilden, da der Platz in dem Mundraum begrenzt ist, wobei die Reinigung von bukkalen Zahnflächen ohnehin durch die unmittelbar angrenzende Wange schwierig ist.

Es bestehen verschiedene Möglichkeiten, Borstenbündel, die üblicherweise zur Zahnreinigung eingesetzt werden, an einem Borstenträger zu befestigen. Das Inmold-Verfahren, bei welchem an dem Borstenbündel eine Verdickung ausgebildet wird, die durch flüssigen Kunststoff, der den Borstenträger oder zumindest einen Teil davon ausbildet, umsiegelt wird, erlaubt dabei die Herstellung von in der Höhe relativ gering aufbauenden Bürsten. Als Höhe im Sinne der vorliegenden Erfindung ist dabei die Erstreckung dabei im Wesentlichen parallel zu den Filamenten der Borstenbündel anzusehen.

Technische Kunststoffe eignen sich aufgrund ihrer hohen Viskosität unter Verarbeitungsbedingungen üblicherweise nicht für das Inmold-Verfahren. Solche technischen Kunststoffe werden indes üblicherweise verwendet, um einen Zapfen des Bürstenkopfes auszuformen, der mit der Welle des Aufsteckteiles zusammenwirkt, um die Dreh- bzw. Schwenkbewegung des Bürstenkopfes bei der Reinigung zu vermitteln.

Der vorliegenden Erfindung liegt das Problem zugrunde, einen verbesserten Bürstenkopf für eine elektrisch angetriebene Zahnbürste anzugeben.

Zur Lösung dieses Problems wird mit der vorliegenden Erfindung ein Bürstenkopf mit den Merkmalen von Anspruch 1 vorgeschlagen. Es handelt sich um einen Bürstenkopf für eine elektrisch angetriebene Zahnbürste. Dieser Bürstenkopf hat ein Halteteil, das zumindest ein Anschlusselement für die mechanische Kopplung des Bürstenkopfes an den elektrischen Antrieb der Zahnbürste bereitstellt. Das Halteteil weist einen Zapfen auf, der eine Schwenkachse des Bürstenkopfes definiert. Üblicherweise befindet sich dieses Halteteil ganz oder teilweise innerhalb des zuvor erwähnten Hülsenelementes des Aufsetzteiles und ist darin so aufgenommen, dass der Bürstenkopf relativ zu dem Hülsenelement eine Dreh- bzw. Schwenkbewegung durchführen kann, indes unverlierbar mit dem Hülsenelement gekoppelt ist. Als Anschlusselement für die mechanische Kopplung des Bürstenkopfes an den elektrischen Antrieb ist im einfachsten Fall eine Aufnahme an den Zapfen ausgespart, in welche die Antriebswelle des Aufsteckteils eingreift, um beispielsweise dem Bürstenkopf eine zyklische Schwenkbewegung relativ zu dem Hülsenelement aufzuprägen. Das Anschlusselement befindet sich in diesem Fall an der Außenumfangsfläche des Halteteils, d. h. ist mit einer Erstreckung rechtwinklig zu der durch das Halteteil vorgegebenen Schwenkachse an dem üblicherweise zylindrischen Zapfen ausgespart. An seinem freien Ende weist der Zapfen üblicherweise eine Zentrierbohrung auf, die mit einem Zentrierzapfen des Hülsenelementes zusammenwirkt, um eine Lagerung für die Schwenkbewegung des Bürstenkopfes zu definieren. An der dem Anschlusselement üblicherweise gegenüberliegenden Seite hat der Zapfen regelmäßig eine Arretierausnehmung, in welche ein fest mit dem Hülsenelement verbundener Arretierstift eingreift, um den Bürstenkopf innerhalb des Hülsenelementes so zu fixieren, dass sich der Bürstenkopf nicht entlang der Schwenkachse aus einer an dem Hülsenelement ausgebildeten Aufnahme für den Zapfen ziehen lässt. Bevorzugt weist die in dem Hülsenelement vorgesehene Welle zur Kopplung mit dem Zapfen einen im Wesentlichen zylindrischen Verriegelungskopf auf, dessen Zylinderachse sich annähernd parallel zu der Schwenkachse des Verriegelungszapfens erstreckt. Zur Aufnahme dieses Verriegelungszapfens hat der zentrische Zapfen üblicherweise eine exzentrisch zu der Schwenkachse, jedoch mit paralleler Erstreckung hierzu vorgesehene Verriegelungszapfenaufnahmen.

Die zuvor diskutierten Elemente des Zapfens befinden sich nach Montage desselben an dem Hülsenelement üblicherweise innerhalb des Hülsenelementes.

Der zentrische Zapfen wird radial von einem Teller überragt, der erfindungsgemäß als Bestandteil des Halteteiles vorgesehen ist. Das Halteteil wird dementsprechend gebildet aus dem zentrischen Zapfen und dem Teller. Der Teller hat üblicherweise eine Grundfläche, die der Grundfläche der von den Reinigungselementen des Bürstenkopfes durchragten Oberfläche des Bürstenkopfes im Wesentlichen entspricht und/oder parallel dazu verläuft. Diese Oberfläche kann kreisrund oder oval sein. Jedenfalls wird die Grundfläche der Oberfläche, d. h. die Kontur derselben, mit einem konvexen umlaufenden Rand gewählt, um die sensiblen Mundschleimhäute maximal vor Beschädigung zu schützen.

Die erfindungsgemäße Bürste hat in an sich bekannter Weise zumindest ein Borstenbündel, welches von dem Teller an seinem dem Zapfen abgewandten Ende getragen ist und in dieser Richtung den Teller überragt. Das Borstenbündel hat an seinem befestigungsseitigen Ende eine durch Anschmelzen ausgebildete Verdickung, über welche das Borstenbündel an dem Bürstenkopf durch Umspritzen befestigt ist. Die Befestigung des Borstenbündels erfolgt danach mittels Inmold-Technik. Neben einem Borstenbündel, das zumindest ein, üblicherweise mehrere Filamente hat, können auch andere Reinigungselemente an dem Bürstenkopf vorgesehen sein, die durch Umspritzen an dem Bürstenkopf verbunden sind, oder aber durch andere Verbindungen nachträglich an dem erstarrten Kunststoff befestigt sind, beispielsweise durch Verrasten, Verschweißen oder Verkleben.

Der Bürstenkopf hat ferner einen im Wesentlichen scheibenförmigen Borstenträger. Der Borstenträger hat üblicherweise eine Grundfläche, die der von dem Borstenbündel durchragten Oberfläche entspricht. Regelmäßig bildet der scheibenförmige Borstenträger diese Oberfläche aus, d. h. formt den oberen Abschluss des Bürstenkopfes aus. Der Borstenträger ist scheibenförmig, d. h. hat im Wesentlichen koplanare Hauptflächen, wobei die eine üblicherweise die Oberfläche des Bürstenkopfes ausbildet und die andere gegenüberliegend zu dem Teller und regelmäßig mit paralleler Erstreckung hierzu vorgesehen ist. Der Borstenträger ist als verhältnismäßig dünne Scheibe mit einer Stärke von zwischen 0,5 und 3,0 mm ausgebildet. Der Borstenträger hat zu dem Borstenbündel eine Bohrung, die von dem Borstenbündel durchragt ist. Dabei befindet sich die durch Anschmelzen ausgebildete Verdickung auf der Rückseite des Borstenträgers. Die Verdickung überragt radial die Bohrung, so dass das Borstenbündel aufgrund der endseitigen Verdickung formschlüssig gegenüber dem Borstenträger verriegelt und gegen Auszug gesichert ist. Die Verdickung kann unmittelbar an der Mündung der Bohrung anliegen. Der Teller kann korrespondierend zu der Lage der jeweiligen Verdickung eine Ausnehmung aufweisen, welche die entsprechende Verdickung aufnimmt, was eine kompakte Ausgestaltung des Bürstenkopfes fördert.

Der Borstenträger ist unter Zwischenlage einer die Verdickung ganz oder teilweise aufnehmenden Zwischensicht mit dem Teller verbunden sein. Diese Zwischenschicht kann eine Klebeschicht sein. Sie kann auch durch Spritzgießen hergestellt werden.

In diesem Fall werden zunächst der Borstenträger und das Halteteil als separate Bauteile her-gestellt, wobei der Borstenträger mit dem oder den Borstenbündel(n) bestückt wird. Die so vorbereiteten Bauteile werden in eine Spritzgussform eingesetzt und auf Abstand zueinander gehalten, so dass die Verdickung des Borstenbündels sich zwischen der Oberseite des Tellers und der Unterseite des Borstenträgers befindet bevorzugt gegen die Bohrung dichtend anliegt. In den zwischen den beiden Teilen verbleibenden Spalt wird dann Kunststoffmasse eingespritzt, die den Spalt vollständig ausfüllt und den Borstenträger mit dem Halteteil verbindet. Die dabei ausgebildete Zwischenschicht befindet sich als Umspritzung bevorzugt nicht nur zwischen dem Borstenträger und dem Teller. Sie kann auch den Teller und/oder den Borstenträger umfänglich ganz oder teilweise umgeben. Hierdurch kann beispielsweise eine Stoßkante aus einem anderen Material hergestellt werden, welches den Borstenträger und das Halteteil umfänglich umgibt und die Außenkontur vorgibt. Das eingespritzte Material ist üblicherweise ein thermoplastischer Kunststoff. Dieser Kunststoff kann ein weichelastisches Material sein. Alternativ kann das eingespritzte Material durch eine Hartkomponente gebildet werden, beispielsweise PP, PE, PA, POM, PC oder PBT. Zu bevorzugen ist grundsätzlich ein leichtfließender Kunststoff, bevorzugt ein Kunststoff mit einem MFI > 15 g/10 min bei 2,16 kg und einer dem Kunststoff entsprechenden Prüftemperatur. Es ist ferner möglich, dem eingespritzten Material einen Zusatz beizufügen, welcher eine reinigende oder polierende Wirkung hat, so dass durch den Außenumfang des Bürstenkopfes die Zähne oder Gewebebereiche innerhalb des Mundraumes schonend gereinigt werden können.

Gemäß einer weiteren bevorzugten Ausgestaltung der vorliegenden Erfindung über- bzw. untergreift der in den Zwischenraum eingebrachte Kunststoff den Borstenträger bzw. den Teller. Dabei ist üblicherweise auf eine Ausgestaltung zu achten, bei welcher auch der in den Zwischenraum eingebrachte Kunststoff absatzfrei und kontinuierlich in eine Oberfläche des Borstenträgers bzw. des Halteteiles übergeht. So kann der Borstenträger einen radialen Vorsprung bzw. radial umlaufenden Rand aufweisen, der mit Abstand zu der Oberfläche des Borstenträgers vorgesehen ist und von dem in den Zwischenraum eingespritzten Kunststoff übergriffen ist, um den Borstenträger auch formschlüssig gegenüber dem Halteteil festzulegen. Ähnlich kann der in den Zwischenraum eingespritzte Kunststoff auch an der Unterseite des Tellers vorgesehen sein. Auch der Teller kann hierzu einen radialen Vorsprung ausbilden, der von dem erstarrten, in den Zwischenraum eingebrachten Kunststoff untergriffen wird, um den in den raum eingebrachten Kunststoff auch formschlüssig in Richtung der Schwenkachse mit dem Halteteil zu verbinden.

Mit Blick auf eine möglichst solide Verbindung ist es zu bevorzugen, den in den Zwischenraum eingebrachten Kunststoff radial bis an den Zapfen heranzuführen, so dass der in den Zwischenraum eingebrachte Kunststoff im Wesentlichen die Rückseite des Tellers abdeckt und die Unterseite des verbreiterten Teils des Bürstenkopfes ausformt, der den üblicherweise zylindrischen Zapfen radial zu der Schwenkachse überragt. Der Teller und der Borstenträger können dabei mit identischer Grundfläche ausgebildet sein, wobei sich der in dem Zwischenraum eingebrachte Kunststoff eben auf jenen Zwischenraum beschränkt. Umgibt der in den Zwischenraum eingebrachte Kunststoff den Borstenträger bzw. den Teller umfänglich, so wird die äußere Kontur des verbreiterten Teils unter anderem auch, üblicherweise ausschließlich durch den in den Zwischenraum eingebrachten Kunststoff definiert. Der in den Zwischenraum einbrachte Kunststoff kann sich aber auch lediglich unterhalb des Borstenträgers befinden, so dass dieser allein die von den Borstenbündeln durchragte Oberfläche definiert und rückseitig von dem Teller und dem in den Zwischenraum eingespritzten Kunststoff hinterlegt ist, der den Teller auch rückseitig umschließen kann, um den Borstenträger formschlüssig auch in Richtung der Schwenkachse mit dem Halteteil zu verbinden.

Mit Blick auf eine möglichst einfache Herstellung des erfindungsgemäßen Bürstenkopfes wird gemäß einer bevorzugten Weiterbildung der vorliegenden Erfindung vorgeschlagen, dass der Teller und/oder das Halteteil einen den Zwischenraum vorgebenden Abstandshalter ausbildet. Der entsprechende Abstandshalter ist üblicherweise einstückig an dem Borstenträger bzw. dem Teller ausgeformt. Der Abstandshalter ragt in Richtung der Schwenkachse von dem Borstenträger bzw. dem Teller ab und liegt mit seinem freien Ende an einer Gegenfläche an, die von dem Borstenträger bzw. dem Teller ausgebildet wird. Der bzw. die Abstandshalter können sowohl an dem Borstenträger als auch dem Teller vorgesehen sein, um den Zwischenraum vorzugeben. Bei der Herstellung des Bürstenkopfes werden die vorgefertigten Teile Borstenträger und Halteteil dementsprechend in der Spritzgießform über die Abstandshalter auf Abstand gehalten, sind indes bereits gegeneinander verpresst, was zu einer gewissen Verformung der Abstandshalter führen kann. Der aber immer verbleibende Zwischenraum wird beim Umspritzen mit dem in den Zwischenraum eingebrachten Kunststoff ausgefüllt, so dass nicht zuletzt aufgrund der Abstandshalter ein Bürstenkopf mit vorbestimmten Abmessungen hergestellt werden kann.

Die Höhe des Zwischenraumes entspricht vorzugsweise in etwa der Größe der Verdickung, um eine möglichst kompakte Höhe des Bürstenkopfes einzustellen. Dieses Kriterium wird bereits dann erfüllt, wenn die Höhe 100 bis 200 % der höhenmäßigen Erstreckung der Verdickung entspricht.

Gemäß einer weiteren bevorzugten Ausgestaltung der vorliegenden Erfindung sind an der Rückseite des Tellers, d. h. auf der dem Borstenträger abgewandten Seite, Noppen vorgesehen, die bevorzugt einteilig an dem Halteteil ausgeformt sind. Die freien Enden dieser Noppen liegen an der Unterfläche des Bürstenkörpers frei. Die Noppen erstrecken sich üblicherweise parallel zur Schwenkachse. Die zuvor erwähnten Noppen dienen ebenfalls der Positionierung des Tellers in einer Spritzgießform derart, dass der in den Zwischenraum eingebrachte Kunststoff die Unterseite des Tellers umfließen und dort erstarren kann, so dass diese Unterseite im Wesentlichen vollständig von dem in den Zwischenraum eingebrachten Kunststoff ausgebildet wird und lediglich die Noppen mit ihren freien Enden an dieser Unterfläche freiliegen. Damit wird eine vorgegebene Schichtdicke des in den Zwischenraum eingebrachten Kunststoffs an der Unterseite des Bürstenkopfes auf einfache Weise vorgegeben. Durch die Noppen wird der dazu in dem Spritzgießwerkstoff notwendige Abstand zuverlässig und einfach eingestellt. Die Noppen befinden sich dabei üblicherweise radial innerhalb eines äußeren Randes des Tellers, so dass dieser randseitig relativ dünn ausgestaltet und von dem in den Zwischenraum eingebrachten Kunststoff umgeben sein kann.

Die zuvor erwähnten Abstandshalter und/oder Noppen sind üblicherweise in Umfangsrichtung auf der Ober- bzw. Unterfläche von Borstenträger und/oder Teller verteilt vorgesehen.

Die vorliegende Erfindung betrifft ferner ein Aufsteckteil für eine elektrische Zahnbürste mit einem Hülsenelement, einer darin vorgesehenen Antriebswelle, die mit einem Antrieb der elektrischen Zahnbürste koppelbar ist, und einem Bürstenkopf nach der vorliegenden Erfindung. Der Bürstenkopf ist dabei mit der Antriebswelle gekoppelt. Das Hülsenelement weist an seinem dem Bürstenkopf gegenüberliegenden Ende mechanische Anschlussmöglichkeiten zur Halterung des Aufsteckteiles an dem Handstück der elektrischen Zahnbürste auf. Des Weiteren ist die Antriebswelle endseitig so ausgebildet, dass beim Aufstecken des Hülsenelementes auf das Gehäuse des Handteils der elektrischen Zahnbürste die Antriebswelle mit der Antriebswelle des Handteiles gekoppelt wird, um die Drehbewegung der Antriebswelle auf den Bürstenkopf zu übertragen. Dabei wird der Bürstenkopf üblicherweise verschwenkt, d. h. die Antriebswelle ist nicht rotierend angetrieben, sondern wird lediglich um einen gewissen Winkelbereich zyklisch verschwenkt.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine perspektivische, teilweise geschnittene Darstellung eines ersten Ausführungsbei-spiels der vorliegenden Erfindung;
- Fig. 2: eine Querschnittsansicht eines zweiten Ausführungsbeispiels;
- Fig. 3: eine Querschnittsansicht eines dritten Ausführungsbeispiels;
- Fig. 4: eine Querschnittsansicht eines vierten Ausführungsbeispiels und
- Fig. 5: eine Querschnittsansicht eines fünften Ausführungsbeispiels.

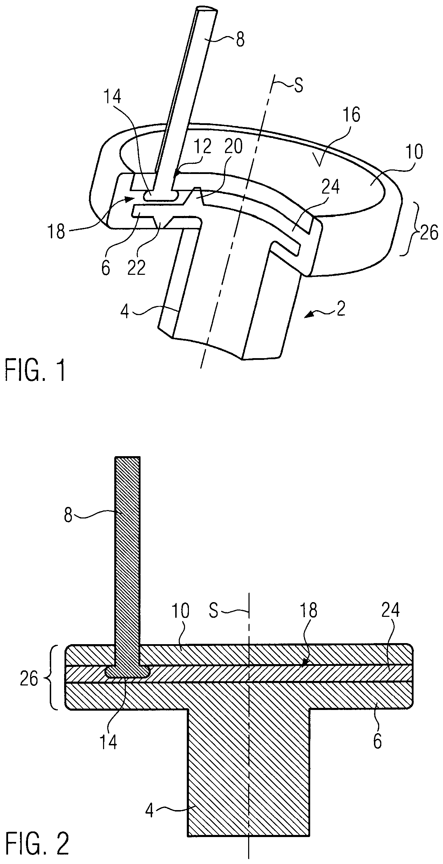

Die Figuren geben jeweils schematisch die Ausführungsbeispiele wieder. Mit Bezugszeichen 2 ist ein Halteteil gekennzeichnet, welches einen Zapfen 4 und einen davon radial abragenden und einteilig an dem Zapfen 4 vorgesehenen Teller 6 ausformt. Ein Borstenbündel 8 durchragt eine in einem Borstenträger 10 vorgesehene Bohrung 12 und liegt mit seiner Verdickung 14 an der Rückseite des Borstenträgers 10 gegen diesen an. Zur Vereinfachung der Darstellung ist in Fig. 1 lediglich ein Borstenbündel 8 dargestellt. Es versteht sich von selbst, dass die gesamte, von dem Borstenträger 10 ausgebildete Oberfläche 16 von Borstenbündeln oder anderen Reinigungselementen, beispielsweise TPE-Reinigungselementen, überragt ist, um eine möglichst vollflächige Reinigungswirkung zu erzielen. Die Borstenbündel und die Reinigungselemente können unterschiedliche Durchmesser, Farben, stoffliche Beschaffenheiten und Konturierungen sowie unterschiedliche Borstenfilamente und unterschiedliche Anzahl von Borstenfilamenten haben, wie dies im Markt üblich ist. Als Reinigungselemente kommen insbesondere TPE-Reinigungselemente in Frage, die sich im Wesentlichen parallel zu dem Borstenbündel 8 erstrecken. Solche TPE-Elemente können auch gelenkig an dem Borstenträger 10 befestigt sein.

Bezugszeichen 18 kennzeichnet einen Zwischenraum, der zwischen der Unterseite des Borstenträgers 10 und der Oberseite des Tellers 6 eingeschlossen ist. In diesem Zwischenraum 18 ragt ein von dem Teller abragender Abstandshalter 20 hinein, der gegen die Unterseite des Borstenträgers 10 anliegt und diesen mit einem vorgegebenen Abstand zu dem Teller 6 hält. In Fig. 1 ist lediglich ein solcher Abstandshalter 20 dargestellt, wenngleich von der Oberfläche des Tellers 6 mehrere solcher Abstandshalter 20 abragen, um den Borstenträger 10 punktuell, jedoch an unterschiedlichen Positionen gegenüber dem Teller 6 zu halten und abzustützen.

Von der Unterseite des Tellers 6 ragt ein Noppen 22 ab. Auch von diesem Noppen 22 sind auf der Unterseite des Tellers 6 mehrere vorgesehen und einteilig daran angeformt.

Mit Bezugszeichen 24 ist ein in den Zwischenraum 18 eingespritzter Kunststoff gekennzeichnet. Dieser füllt den Zwischenraum 18 vollständig aus. Der Kunststoff 24 umgibt ferner den Borstenträger 10 umfänglich, endet indes auf der Oberfläche 16 flächenbündig mit dem Borstenträger 10. Der Kunststoff 24 umgibt auch die Unterseite des Tellers 6 und ragt radial bis an den Zapfen 4 heran. Durch diese Ausgestaltung ist ein mit Bezugszeichen 26 gekennzeichneter verbreiteter Teil des Bürstenkopfes nach Art einer Scheibe ausgeformt, die sich zusammensetzt aus dem Borstenträger 10, dem Teller 6 sowie der Umspritzung durch den Kunststoff 24. Die Kanten der Scheibe sind jeweils abgerundet. Der Kunststoff 24 ist vorliegend ein leicht fließendes thermoplastisches Elastomer, welches nicht nur den Borstenträger 10 und den Teller 6 miteinander verbindet, sondern darüber hinaus auch eine außenseitige Begrenzung der Scheibe aus einem relativ weichen Werkstoff ausformt, der die empfindlichen Mundschleimhäute besser schont als ein härterer Kunststoff.

Aus einem technischen Kunststoff ist das Halteteil 2 ausgebildet. Ein technischer Kunststoff hat eine hohe Verschleißfestigkeit und ein hohes E-Modul, von zumindest 1500 MPa. Die Viskosität eines solchen technischen Kunststoffes ist relativ hoch. Der MFI eines technischen Kunststoffes der vorliegenden Erfindung liegt bei ≤ 20 g/10 min bei dem Kunststoff entsprechende Prüftemperatur und 2,16 kg Belastung. Ein technischer Kunststoff ist insbesondere POM, PA, PC bzw. PBT. Aus einem solchen Werkstoff ist das Halteteil 2 gebildet. Dabei hat der Zapfen 4 üblicherweise die in der allgemeinen Beschreibung vorgestellten Anschlüsse Halterungen und Zentrierungen, mit welcher das gezeigte Ausführungsbeispiel in einem nicht gezeigten Hülsenelement eines Aufsteckteiles für eine elektrische Zahnbürste gehalten und mechanisch mit dem Antrieb koppelbar ist.

Bei dem gezeigten Ausführungsbeispiel kann der Kunststoff 24 eine Haftung zwischen dem Borstenträger 10 und dem Halteteil 2 aus dem technischen Kunststoff vermitteln. Der Borstenträger kann dabei aus einer Hartkomponente gebildet sein, beispielsweise PA, PET, PP, PE, POM, PC bzw. PBT.

Das in Fig. 1 gezeigte Ausführungsbeispiel geht davon aus, dass für die zuverlässige Befestigung des Kunststoffs 24 an dem Halteteil 2 ein Formschluss notwendig ist. So erstreckt sich der Kunststoff 24 auch auf der Unterseite des Tellers und bildet dementsprechend die Unterfläche des verbreiterten Teils 26 aus, die von dem Zapfen 4 durchragt ist. Die stoffliche Beschaffenheit des Borstenträgers 10 ist hingegen so, dass der Kunststoff 24 allein stoffschlüssig sicher an dem Borstenträger 10 angebunden werden kann. Der Kunststoff 24 umgibt indes den Borstenträger 10 allein umfänglich.

Zur Herstellung des in Fig. 1 gezeigten Ausführungsbeispiels wird zunächst der Borstenträger 10 mittels Spritzengießen aus Kunststoff hergestellt, wobei beim Spritzgießen die Bohrung 12 bzw. die Bohrungen ausgeformt werden. Danach wird der Borstenträger 10 mit den Borstenbündeln 8 bestopft, deren befestigungsseitiges Ende zunächst mit Abstand zu dem Borstenträger 10 angeordnet und angeschmolzen wird. Danach wird das Borstenbündel 8 axial verschoben, um die beim Anschmelzen ausgebildete Verdickung 14 gegen die Unterseite des Borstenträgers anzulegen.

Das Halteteil 2 wird mittels Spritzgießen aus dem technischen Kunststoff in Endkontur mit allen Funktionsflächen an den Zapfen vorbereitet. Die beiden vorbereiteten Bauteile 2 und 10 werden in eine Spritzgussform eingelegt. Dabei wird das Halteteil 2 der einen Werkzeughälfte und der Borstenträger 10 der anderen Werkzeughälfte zugeordnet. Der Borstenträger 10 wird dabei üblicherweise mit einer sogenannten Lochfeldplatte gehalten, die üblicherweise außerhalb der Spritzgussform mit dem Borstenträger 10 versehen und danach zur Komplettierung der Spritzgussform in diese eingesetzt wird. Beim Schließen der Spritzgießform werden die Abstandshalter 20 gegen die Unterseite des Borstenträgers 10 angelegt und dabei geringfügig komprimiert. Der verbleibende Zwischenraum 18 wird mit dem dann eingespritzten Kunststoff 24 gefüllt. Durch die Noppen 22 ist auch die ansonsten ebene Rückseite des Tellers 6 mit Abstand zu der Spritzgussform gehalten, so dass dort ein Spalt freigelassen wird, der durch den Kunststoff 24 ausgefüllt wird, um die rückseitige Umspritzung des Tellers mit dem Kunststoff 24 auszuformen. Nach hinreichendem Erkalten des Kunststoffs 24 wird das Formnest geöffnet und das in Fig. 1 schematisch dargestellte fertige Erzeugnis entnommen.

Die Fig. 2 zeigt im Querschnitt eine Grundform der vorliegenden Erfindung. Gleiche Bauteile sind gegenüber dem zuvor beschriebenen Ausführungsbeispiel mit gleichen Bezugszeichen gekennzeichnet. Dies gilt für sämtliche Figuren der Zeichnung.

Bei der Grundform nach Fig. 2 ist der Zwischenraum 18 durch den Kunststoff 24 ausgefüllt. Der Kunststoff 24 endet bündig an einer Außenumfangsfläche des verbreiterten Teils 26, der oben durch den Rand des Borstenträgers 10, unten durch den Rand des Tellers 6 und dazwischen durch den Kunststoff 24 ausgebildet wird.

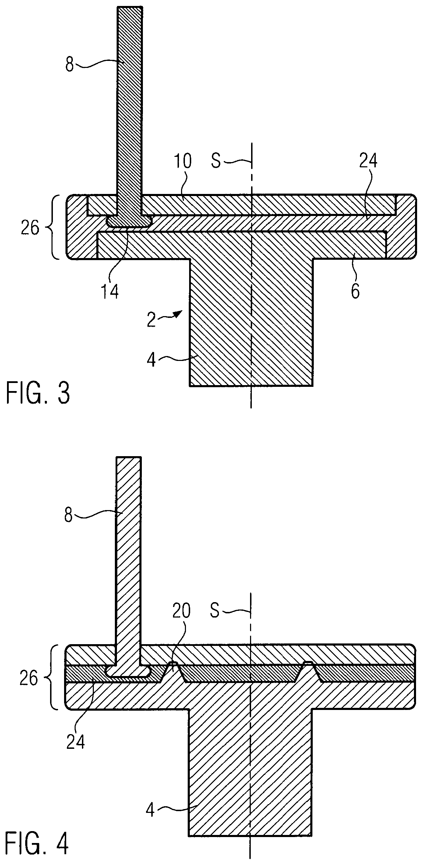

Bei dem Ausführungsbeispiel nach Fig. 3 hat der Teller 6 gegenüber Fig. 2 eine geringere radiale Erstreckung als der Borstenträger 10. Der Kunststoff 24 umgibt umfänglich sowohl den Borstenträger 10 als auch den Teller 6, trägt indes nichts zu einer höheren Dicke oberhalb der Oberfläche 16 bzw. unterhalb der Unterseite des Tellers 6 bei. Der Kunststoff 24 ist lediglich Stoßschutz, der den Borstenträger 10 und den Teller 6 umfänglich umgibt. Bei einer solchen Ausgestaltung sind das Halteteil 2 und der Borstenträger 10 üblicherweise aus Kunststoffen ausgebildet, die an dem in den Zwischenraum 18 eingespritzten Kunststoff 24 haften, so dass sich in Richtung der Schwenkachse S eine stoffschlüssige Verbindung ergibt.

Die in Fig. 4 dargestellte Ausgestaltung entspricht im Wesentlichen Fig. 2, wobei indes von dem Teller 5 einteilig an dem Halteteil 2 ausgebildete Abstandshalter 20 abragen und gegen die Unterseite des Borstenträgers 10 anliegen, um den Zwischenraum 18 zu definieren.

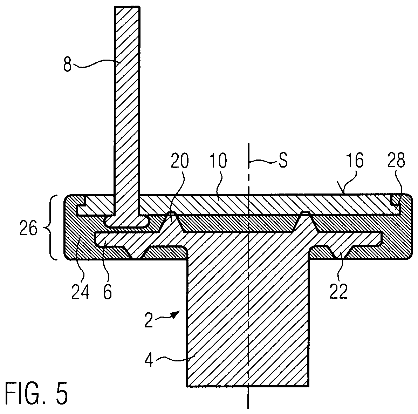

Die in Fig. 5 gezeigte Ausgestaltung entspricht im Wesentlichen dem Beispiel nach Fig. 1. Allerdings hat hier der Borstenträger 10 einen mit Abstand zu der Oberfläche 16 ausgebildeten Verriegelungsrand 28, der die von dem Borstenträger 10 ausgebildete Oberfläche 16 radial überragt und in Richtung einer mit Bezugszeichen S gekennzeichneten Schwenkachse von dem Kunststoff 24 übergriffen ist. Dadurch wird auch der Borstenträger 10 formschlüssig gegen Auszug in Richtung der Schwenkachse S gesichert. Durch das Untergreifen der Unterseite des Tellers 6 ergibt sich eine entsprechend wirkende formschlüssige Verbindung zwischen dem Kunststoff 24 und dem Halteteil 2. Im Übrigen umgibt der Kunststoff 24 sowohl den Borstenträger 10 als auch den Teller 6 außenumfänglich, so dass auch in einer Richtung radial zu der Schwenkachse S eine formschlüssige Verbindung gegeben ist. Das in Fig. 5 gezeigte Ausführungsbeispiel eignet sich insbesondere für die Verbindung der unterschiedlichen Bauteile, wenn das Material des Borstenträgers und das Material des Halteteiles 2 haftungsinkompatibel zu dem Kunststoff 24 sind.

### Bezugszeichenliste

- 2: Halteteil
- 4: Zapfen
- 6: Teller
- 8: Borstenbündel
- 10: Borstenträger
- 12: Bohrung
- 14: Verdickung
- 16: Oberfläche
- 18: Zwischenraum
- 20: Abstandshalter
- 22: Noppe
- 24: in den Zwischenraum 18 eingespritzter Kunststoff
- 26: verbreiterter Teil
- 28: Verriegelungsrand, verbreiterter Teil des Bürstenkopfes
- S: Schwenkachse

## Patentansprüche

1. Bürstenkopf für eine elektrisch angetriebene Zahnbürste, mit einem Halteteil (2), das zumindest ein Anschlusselement für die mechanische Kopplung des Bürstenkopfes an den elektrischen Antrieb der Zahnbürste bereitstellt, wobei das Halteteil (2) einen Zapfen (4), der eine Schwenkachse (S) definiert, um die der Bürstenkopf verschwenkbar ist, und einen Teller (6) einteilig ausbildet, der an seinem dem Zapfen (4) abgewandten Ende zumindest ein Borstenbündel (8) trägt, das an seinem befestigungsseitigen Ende eine durch Anschmelzen ausgebildete Verdickung (14) aufweist, undeinem im Wesentlichen scheibenförmigen Borstenträger (10), der eine von dem Borstenbündel (8) durchragte Bohrung aufweist und mit dem Halteteil (2) verbunden ist,
**dadurch gekennzeichnet,**
**dass** der Borstenträger (10) durch einen in einen Zwischenraum (18) zwischen dem Borstenträger (10) und dem Halteteil (2) eingebrachten Kunststoff (24) mit dem Halteteil (2) verbunden ist.

2. Bürstenkopf nach Anspruch 1 **dadurch gekennzeichnet, dass** der in den Zwischenraum (18) eingebrachte Kunststoff (24) den Borstenträger (10) und/oder den Teller (6) umfänglich umgibt.

3. Bürstenkopf nach einem der Ansprüche 1 oder 2, **dadurch gekennzeichnet, dass** der in den Zwischenraum eingebrachte Kunststoff (24) den Teller (6) und/oder den Borstenträger unter- bzw. übergreift.

4. Bürstenkopf nach einem der Ansprüche 1 bis 3, **dadurch gekennzeichnet, dass** der Borstenträger (10) und/oder das Halteteil (2) einen den Zwischenraum vorgebenden Abstandshalter (20) ausbildet.

5. Bürstenkopf nach Anspruch 4, **dadurch gekennzeichnet, dass** der Zwischenraum in etwa der Größe der Verdickung (14) entspricht.

6. Bürstenkopf nach einem der Ansprüche 1 bis 5, **dadurch gekennzeichnet, dass** der in den Zwischenraum (18) eingebrachte Kunststoff (24) an der Unterseite des Tellers (6) vorgesehen ist.

7. Bürstenkopf nach einem der Ansprüche 1 bis 6, **dadurch gekennzeichnet, dass** der in den Zwischenraum (18) eingebrachte Kunststoff (24) den Teller (6) unterseitig im Wesentlichen vollflächig abdeckt.

8. Bürstenkopf nach einem der Ansprüche 1 bis 7, **dadurch gekennzeichnet, dass** von der Rückseite des Tellers (6) einteilig an dem Halteteil (2) ausgeformte Noppen (22) abragen, deren freie Enden an der Unterfläche des Bürstenkopfes freiliegen.

9. Aufsteckteil für eine elektrische Zahnbürste mit einem Hülsenelement, einer darin vorgesehenen Antriebswelle, die mit einem Antrieb der elektrischen Zahnbürste kuppelbar ist, und einem Bürstenkopf nach einem der Ansprüche 1 bis 8, der mit der Antriebswelle gekoppelt ist.

## Claims

1. Brush head for an electrically driven toothbrush, comprising a holding part (2) that provides at least one connecting element for mechanically coupling said brush head to the electric drive of said toothbrush, where said holding part (2) integrally forms a stud (4) defining a pivot axis (S) about which said brush head is pivotable and a plate (6) which at its end facing away from said stud (4) carries at least one bristle bundle (8) which at its attachment-side end comprises a thickening (14) formed by surface melting,
and a substantially disc-shaped bristle carrier (10) comprising a bore that is penetrated by said bristle bundle (8) and being connected to said holding part (2), **characterized in that**
said bristle carrier (10) is connected to said holding part (2) by plastic material (24) inserted into an intermediate space (18) between said bristle carrier (10) and said holding part (2).

2. Brush head according to claim 1, **characterized in that** said plastic material (24) introduced into said intermediate space (18) circumferentially surrounds said bristle carrier (10) and/or said plate (6).

3. Brush head according to one of the claims 1 or 2, **characterized in that** said plastic material (24) introduced into said intermediate space underlaps and overlaps said plate (6) and/or said bristle carrier, respectively.

4. Brush head according to one of the claims 1 to 3, **characterized in that** said bristle carrier (10) and/or said holding part (2) forms a spacer (20) which defines said intermediate space.

5. Brush head according to claim 4, **characterized in that** said intermediate space corresponds approximately to the size of said thickening (14).

6. Brush head according to one of the claims 1 to 5, **characterized in that** said plastic material (24) introduced into said intermediate space (18) is provided at the underside of said plate (6).

7. Brush head according to one of the claims 1 to 6, **characterized in that** said plastic material (24) introduced into said intermediate space (18) covers said plate (6) on the underside substantially over the entire surface.

8. Brush head according to one of the claims 1 to 7, **characterized in that** nubs (22) that are integrally formed on said holding part (2) and the free ends of which are exposed on the undersurface of said brush head project from the rear side of said plate (6).

9. Attachment part for an electric toothbrush comprising a sleeve member, a drive shaft provided therein which can be coupled to a drive of said electric toothbrush, and a brush head according to one of claims 1 to 8 which is coupled to said drive shaft.

## Revendications

1. Tête de brosse pour une brosse à dents électrique, comprenant une partie de maintien (2) qui fournit au moins un élément de liaison pour l'accouplement mécanique de la tête de brosse à dents à l'entraînement électrique de la brosse à dents, dans laquelle la partie de maintien (2) forme d'un seul tenant un pivot (4), qui définit un axe de pivotement (S) autour duquel la tête de brosse peut pivoter, et un plateau (6) qui supporte, au niveau de son extrémité opposée au pivot (4), au moins un faisceau de poils (8) qui présente, au niveau de son extrémité située côté fixation, un épaississement (14) formé par fusion, et un support de poils (10), essentiellement en forme de disque, qui est relié à la partie de maintien (2) et présente un alésage à travers lequel le faisceau de poils (8) fait saillie,
**caractérisée en ce que,**
le support de poils (10) est relié à la partie de maintien (2) grâce à une matière plastique (24) introduite dans un interstice (18) entre le support de poils (10) et la partie de maintien (2).

2. Tête de brosse selon la revendication 1, **caractérisée en ce que** la matière plastique (24) introduite dans l'interstice (18) entoure de manière périphérique le support de poils (10) et/ou le plateau (6).

3. Tête de brosse selon la revendication 1 ou 2, **caractérisée en ce que** la matière plastique (24) introduite dans l'interstice vient en prise avec le plateau (6) et/ou le support de poils par-dessous ou par-dessus.

4. Tête de brosse selon l'une quelconque des revendications 1 à 3, **caractérisée en ce que** le support de poils (10) et/ou la pièce de maintien (2) forme(nt) une pièce d'écartement (20) définissant l'interstice.

5. Tête de brosse selon la revendication 4, **caractérisée en ce que** l'interstice correspond à peu près à la taille de l'épaississement (14).

6. Tête de brosse selon l'une quelconque des revendications 1 à 5, **caractérisée en ce que** la matière plastique (24) introduite dans l'interstice (18) est fournie au niveau de la face inférieure du plateau (6).

7. Tête de brosse selon l'une quelconque des revendications 1 à 6, **caractérisée en ce que** la matière synthétique (24) introduite dans l'interstice (18) recouvre essentiellement toute la face inférieure du plateau (6).

8. Tête de brosse selon l'une quelconque des revendications 1 à 7, **caractérisée en ce que** des tétons (22) formés au niveau de la partie de maintien (2) et dont les extrémités libres sont exposées au niveau de la face inférieure de la tête de brosse dépassent d'un seul tenant de la face arrière du plateau (6).

9. Pièce enfichable pour une brosse à dents électrique, comprenant un élément formant manchon, un arbre d'entraînement prévu dans celui-ci et pouvant être accouplé à un entraînement de la brosse à dents électrique, et une tête de brosse selon l'une quelconque des revendications 1 à 8 qui est accouplée à l'arbre d'entraînement.
